# EUROPEAN PATENT APPLICATION

(11) **EP 2 955 565 A1**
(43) Date of publication of application: **16.12.2015**
(21) Application number: 13874324.0
(22) Date of filing: 05.02.2013
(51) Int. Cl.: G02C 5/16

(54) **SPECTACLE FRAME**

(71) Applicant: SUNREEVE COMPANY LIMITED, Sabae-shi, Fukui 916-0005 (JP)
(72) Inventor: KANATANI Hideyuki, Sabae-shi Fukui 916-0005 (JP)
(74) Representative: Vossius & Partner Patentanwälte Rechtsanwälte mbB
(86) International application number: PCT/JP2013/052565
(87) International publication number: WO 2014/122722

(57) **Abstract**

A spectacle frame includes a front portion (1) configured to hold lenses (4a, 4b) and temples (2a, 2b) on both sides of the front portion 1, ring joint portions (3a, 3b) having a torsion coil spring shape are formed of a wire extending continuously from the front portion (1), a wire is further extended from the ring joint portions (3a, 3b) to form the temples (2a, 2b), whereby a joint portions is formed without using a screw, so that stable wearing is ensured in the case of being worn on the face. Simultaneously, locking strips (10a, 10b) configured to be locked with a coil portion of the ring joint portion (3a, 3b) at distal ends of resin-made tips (7a, 7b) fitted by insertion on distal end portions of the temples (2a, 2b) are provided, so that the distal end portions of the temples can be locked reliably with a portion in the vicinity of the joint portions.

## Description

### Technical Field

The present invention relates to a spectacle frame in which no screw is used, whereby easy assembling and indefinitely stable wearing without looseness are achieved.

### Background Art

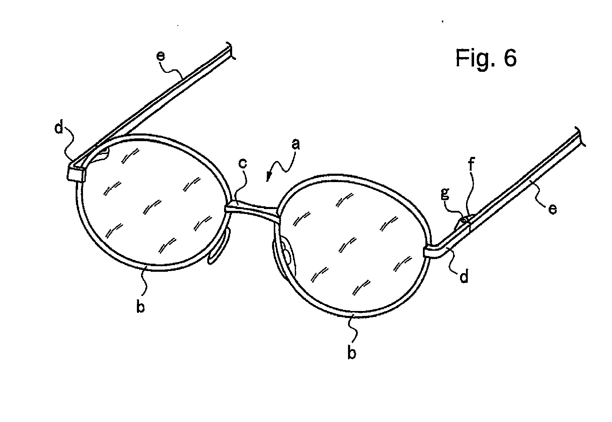

In general, a spectacle frame is configured so that temples are attached at both sides of a front portion, and the temples are foldable via joints such as hinges. Fig. 6 illustrates a conventional and general metallic spectacle frame. In a front portion a, rims b, b to fit lenses into are coupled by a coupling member c, and temples e, e are coupled via joints f, f to armor lugs d, d brazed to both sides of the front portion a.

Although there are various modes of the front portions a for the spectacle frame, in portions other than the front portion, the temples e, e are normally attached via the joints f, f to the armor lugs d, d provided on the both sides of the front portion a so as to be foldable. Since spectacles are stored in a case when being carried, the both temples e, e are attached so as to be foldable. The foldability is achieved by using the joints f, f such as hinges.

The joints f, f are provided with screws g, g. The temples e, e rotate about the screws g, g, and the screws g, g also rotate and are slightly loosened in association with the rotation. Consequently, the temples e, e are rattled, and stability when the spectacles are worn are impaired. Various attempts have conventionally been made to avoid loosening of the screws g, g used for the joints f, f.

For example, a "LOOSENING PREVENTING SCREW" disclosed in JP2010-107029A is configured to ensure prevention of coupling portions of spectacles with screws from loosening.

There, a shape of a notched portion of the screw projected onto a screw shaft lateral cross section is a substantially triangular shape. A shape formed by connecting three apexes thereof with straight lines is substantially a right scalene triangle. Either one of apexes of a right angle or an obtuse angle of the right scalene triangle is configured to be located at a return-side thread crest, and the other one of those is configured to be located at a root bottom. A remaining apex of an acute angle portion is configured to be located on a drive-in-side thread crest. And the notched portion formed in this manner is provided at least at one position on a turning portion.

In the "CONNECTING STRUCTURE OF SPECTACLE PARTS AND PART USED THEREFOR" disclosed in JP2003-185980A, when spectacle lenses and spectacle parts are connected, loosening of screws at screw connecting portions therebetween are prevented, rotations of spectacle frame parts and eyeglass lenses are prevented, and thereby the both are connected firmly.

In this configuration, tapered connecting parts have a tapered contour formed into a circular truncated cone, and have a non-circular hole, such as a polygonal shape or an oval shape in cross-section in a direction at a right angle with respect to a center axis, at a center portion thereof. The connecting parts are inserted into tapered holes formed in the spectacle lenses. In contrast, specific members are used as parts joined to the spectacle parts such as armor lugs or bridges. The specific members have a non-circular contour such as a polygonal shape or an oval shape, and are formed with a female screw at a center portion thereof. The specific members are connected to the spectacle parts. The members are inserted into the non-circular holes of the parts for connection. The female screws are fastened with the female screws of the members. Thereby the spectacle lenses and the spectacle parts are firmly connected without rotation.

As a requirement of the spectacles, stability without positional displacement when the spectacles are worn on a face is required. To that end, it is necessary to prevent the screws g, g of the joints f, f from loosening, and to bias the temples e, e with a spring force for pressing side surface of the face or temporal regions in a state of wearing the spectacles. A member referred to as a spring hinge is conventionally used as a joint.

The spring hinge includes a small coil spring stored in the interior thereof, and is configured to compress the coil spring by opening the temple outward, and consequently, causing a spring force for returning the temple back to the original position to effect. However, since the spring hinges have a very complex structure, a manufacturing cost is high. Therefore, there are various members provided with a leaf spring on the joint sides of the temples to function in the same manner as the spring hinges. However, in the case of the joint structure as well, there is a problem of a high manufacturing cost.

### Citation List

### Patent Literature

PTL 1: JP2010-107029A "LOOSENING PREVENTING SCREW"
PTL 2: JP2003-185980A "CONNECTING STRUCTURE OF SPECTACLE PARTS AND PART USED THEREFOR"

### Summary of Invention

### Technical Problem

In this manner, the conventional spectacle frame has problems as described above. A problem to be solved by the present invention is to solve the problems, and to provide a spectacle frame without joints including screws for folding temples, to enable stable wearing by providing a spring force for pressing the temples onto side surfaces of a face or temporal regions when the spectacles are worn, and to enable reliable locking of distal end portions of the temples with the vicinity of both ends of a front portion when the temples are folded.

### Solution to Problem

A spectacle frame of the present invention includes: a front portion, and temples. The templesare provided on both sides of the front portion. Resilient members are used between the temples and the front portion. The resilient members are resiliently deformed as joint portions configured to allow the temples to be freely foldable. In other words, the spectacle frame according to the present invention is configured without using a joint having a screw. Folding the temples is achieved by resilient deformation of the resilient joint portions. The temples are normally in a state of being intersecting in an X-shape, that is, in a state of being folded inward to a half. Here, a specific structure of the joint portions which allows resilient deformation is not specifically limited. For example, the joint portions may be configured as ring joint portions by forming resilient wires into a torsion coil spring shape, and may be configured as joint portions by using leaf springs or the like. The ring joint portions having the torsion coil spring shape may be formed continuously from and integrally with the temples.

A mode of the front portion is not limited, and may be either of a mode having full rims to fit lenses into, a mode having half rims configured to constrain upper sides of the lenses and leveling lines for supporting the lenses, or a mode having no-rim front portion without rim. Ear hooking portions configured to hook on ears when the spectacles are worn, are preferably configured in such a manner that tips (ear hooks) formed of resin or rubber are fitted by insertion on distal end portions of the temples, but may be formed by extending directly the temples, whereby the distal end portions thereof are used as the ear hooking portions.

Locking strips are formed at the distal end portions of the ear hooking portions, and the joint portions are provided with locking portions. The locking strips formed at the distal end portions of the ear hooking portions can be locked with the locking portions provided on the joint portions so that the temples are not to be opened when the temples are folded. In the case where the tips formed of resin or rubber are attached, as the ear hooking portions, to the distal end portions of the temples, the locking strips are formed at the distal end portions of the tips. In the case where the temples are directly extended to form the distal end portions as the ear hooking portions, the locking strips are formed at the distal end portions of the ear hooking portions of the temples.

In the case where the ring joint portions having the torsion coil spring shape are employed as the joint portions, the ring joint portions are configured so that coils of the torsion coil springs come inside, and the coils positioned inside function as the locking portions. In other words, the locking strips formed at the distal end portions of the ear hooking portions are configured to be capable of being reliably locked with the coils of the ring joint portions. In the case where the leaf spring joint portion formed by the leaf springs are used, semi-arcuate locking portions curved into a semi-arcuate shape are provided so as to be positioned inside the leaf spring joint portions, so that the locking strips formed at the distal end portions of the ear hooking portions are with the locking portion. In the case where the semi-arcuate locking portions curved into the semi-arcuate shape are provided, the semi-arcuate locking portions are disposed so that centers of semi-arcs of the semi-arcuate locking portions are positioned between the leaf spring joint portions and the semi-arcuate locking portions.

### Advantageous Effects of Invention

The spectacle frame according to the present invention is configured without using a screw. Therefore, the screw-tightening step is not necessary at the time of assembly and, consequently, the number of manufacturing steps is lowered, and the cost is also lowered. Since the screw is not used, loosening of screws as conventional does not occur, a temple folding operation is always performed smoothly, and the spectacles are stable when being worn on the face. The both temples are in a state of being folded inward to some extent in a free state in which the spectacles are removed, and the temples are opened outward when the spectacles are worn on the face.

In the spectacle frame of the present invention, in the case where the torsion coil spring is formed by rolling the wires extending from the front portion, the torsion coil spring functions as the ring joint portions, so that the temples can be folded inward by the resilient deformation of the ring joint portions. In the case where the leaf spring joint portion is formed, the temples can be folded inward by the resilient deformation of the leaf springs. In addition, since the joint portions are formed of a resilient member configured to be resiliently deformable, the ring joint portions may present the same advantages and effects as the spring hinges by the function of the torsion coil springs, and the leaf springs may also do so by the resiliency of the leaf springs. In other words, when the spectacles are worn, the reaction force caused by opening the temples outward acts on a side surface of the face, so that the spectables are stably worn. In contrast, when the temples are folded, the locking strips formed at the distal end portions of the ear hooking portions such as the tips can be reliably locked with the locking portions provided on the joint portions such as the ring joint portions or the leaf spring joint portions.

### Brief Description of Drawings

[Fig. 1] Fig. 1 is a plan view of a spectacle frame according to a first embodiment of the present invention, illustrating the spectacle frame in a state where temples are opened in a state of being worn on a face.
[Fig. 2] Fig. 2 is a left side view of the same spectacle frame.
[Fig. 3] Fig. 3 is a plan view illustrating the same spectacle frame in a state in which it is removed from the face, and the temples are free.
[Fig. 4A] Fig. 4A is a plan view illustrating the same spectacle frame in a state in which the temples are folded.
[Fig. 4B] Fig. 4B is a front view illustrating the same spectacle frame in a state in which the temples are folded.
[Fig. 5A] Fig. 5A is a plan view illustrating a principal portion of a spectacle frame according to a second embodiment of the present invention.
[Fig. 5B] Fig. 5B is a left side view of the principal portion of the same spectacle frame.
[Fig. 6] Fig. 6 is a perspective view illustrating a conventional and general spectacle frame.

### Description of Embodiments

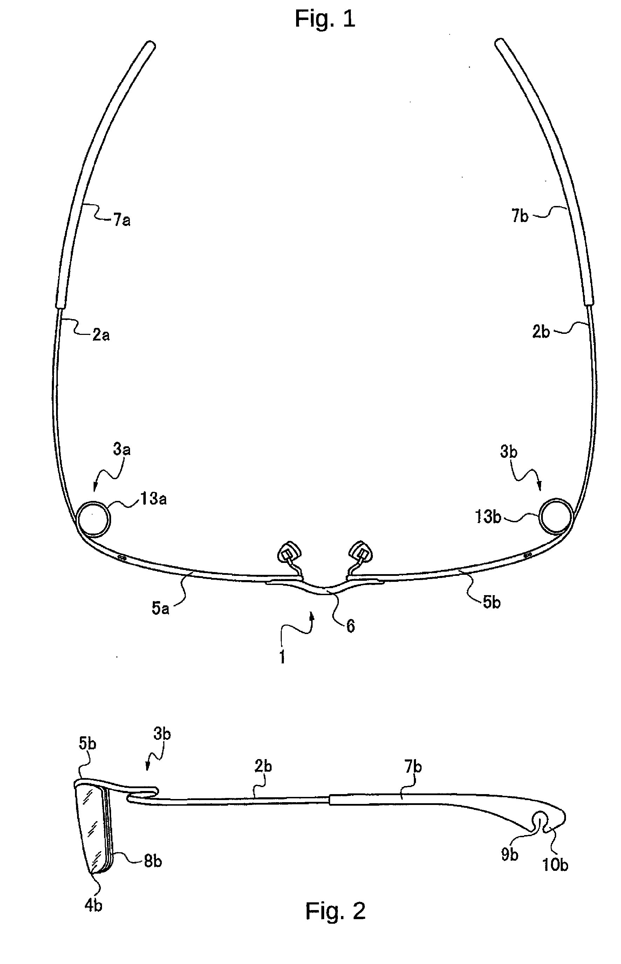

Fig. 1 and Fig. 2 illustrate a spectacle frame according to a first embodiment of the present invention, in which reference numeral 1 denotes a front portion, reference numerals 2a, 2b denote temples, and reference numerals 3a, 3b denote ring joint portions, respectively. Lenses 4a, 4b are attached in lateral symmetry to the front portion 1. In order to do this, the lenses 4a, 4b are held by leveling lines 8a, 8b, and both ends of the leveling lines 8a, 8b are secured to half rims 5a, 5b.

The both half rims 5a, 5b are brazed by a coupling member 6 at a center and are coupled in lateral symmetry. The half rims 5a, 5b extend outward to form the ring joint portions 3a, 3b, and extend further rearward from the ring joint portions 3a, 3b to form the temples 2a, 2b. In other words, the half rims 5a, 5b, the ring joint portions 3a, 3b, and the temples 2a, 2b are each formed of one continuous wire. Resin made tips (ear hooks) 7a, 7b for hooking on the ears are fitted by insertion on the distal end portions of the temples 2a, 2b.

A joint provided with a screw is not used in the spectacle frame of the present invention. As illustrated in Fig. 1 to Fig. 4B, the spectacle frame of the first embodiment of the present invention include the ring joint portions 3a, 3b formed by curving wires into a torsion coil spring shape having a coil positioned inside the spectacle frame. And the temples 2a, 2b can be folded inward by a resilient deformation (torsional deformation) of the ring joint portions 3a, 3b. In the spectacle frame of the first embodiment illustrated in Fig. 1, the temples 2a, 2b are positioned in a state in which the spectables are worn on the face. As illustrated in Fig. 1 to Fig. 4B, the ring joint portions 3a, 3b of the spectacle frame of the first embodiment are formed into a torsion coil spring shape including coils (rings) 13a, 13b. The coils (rings) 13a, 13b are positioned inside the spectacle frame, and a center axis of the coil extends in a vertical direction. In the same drawings, the coils (rings) 13a, 13b are one turn coils. However, the coils (rings) may be two-turn coils.

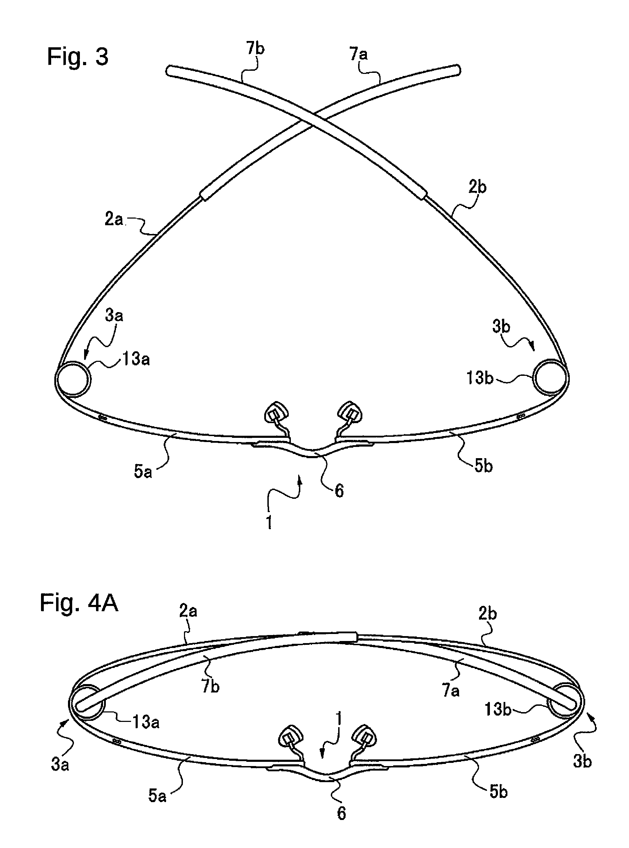

Fig. 3 is a plan view illustrating the spectacle frame of the first embodiment in a state in which the spectables are removed from the face, and the temples 2a, 2b are positioned in a state of being folded inward by a half as illustrated in the same drawing, that is, in a state intersecting into an X-shape. The ring joint portions 3a, 3b are formed of resiliently deformable resilient members. When the spectables are worn on the face, the temples 2a, 2b are opened outward and the ring joint portions 3a, 3b are subjected to torsional deformation by the outward opening as illustrated in Fig. 1. When the spectables are worn, the both temples 2a, 2b are opened outward, so that the temples 2a, 2b act as a pressing force to the side surfaces of the face by a reaction force in association with the torsional deformation of the ring joint portions 3a, 3b. With this action, in the same manner as the temples of the conventional spectacle frame provided with the spring hinges, the spectables can be worn stably on the face without rattling.

The ring joint portions 3a, 3b are subjected to the torsional deformation by opening the temples 2a, 2b outward, which are folded inward by a half into an X-shape in the state in which the spectables are removed from the face. Since the ring joint portions 3a, 3b are formed so as to extend continuously from the half rims 5a, 5b of the front portion 1, the front portion 1 can resists the spring force in association with the torsional deformation of the ring joint portions 3a, 3b. In other words, in the spectacle frame of the first embodiment, the half rims 5a, 5b, the ring joint portions 3a, 3b, and the temples 2a, 2b are formed integrally of a continuous wire.

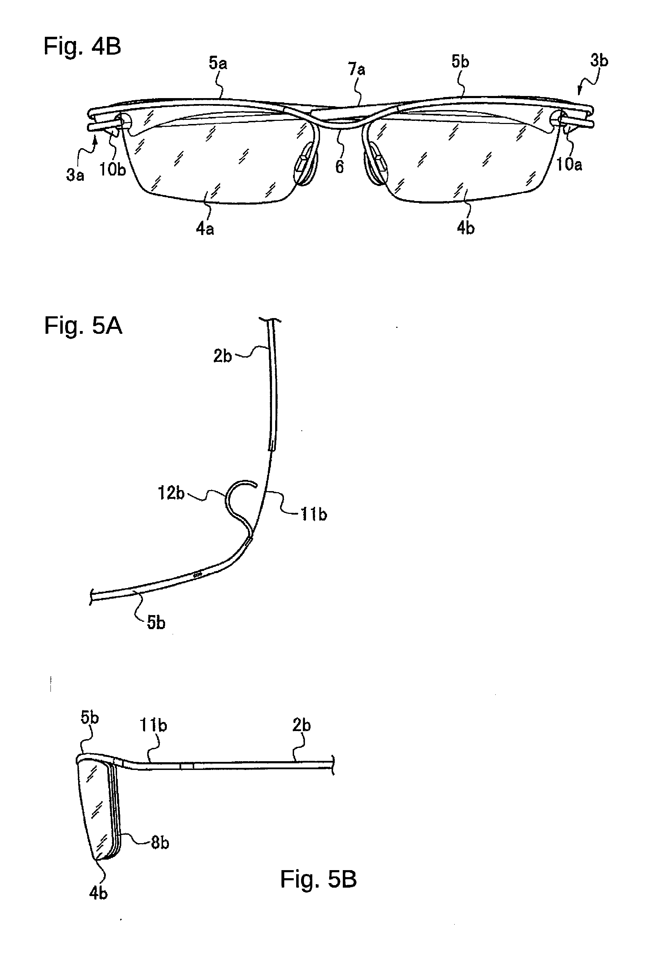

Fig. 4A and Fig. 4B are a plan view and a front view, respectively, illustrating the spectacle frame of the first embodiment in a state in which the temples 2a, 2b are folded. The spectacle frame of to the present invention does not employ the hinge joints provided with a screw. Therefore, only by folding the temples 2a, 2b simply like the conventional spectacle frame, the temples 2a, 2b open immediately by a returning spring force of the ring joint portions 3a, 3b and return back to the state illustrated in Fig. 3.

Therefore, notched grooves 9a, 9b are formed on lower sides of the distal end portions of the tips 7a, 7b fitted by insertion on the distal end portions of the temples, and distal end sides of the tips 7a, 7b with respect to the notched grooves 9a, 9b correspond to locking strips 10a, 10b. Arcuate portions of the coils (rings) 13b, 13a of the ring joint portions 3b, 3a fit to the notched grooves 9a, 9b, so that the locking strips 10a, 10b can be locked reliably into the coils (rings) 13a, 13b. In other words, the coils (rings) 13b, 13a of the ring joint portions 3b, 3a function as the locking portions. More specifically, when the temple 2a on the right side is folded, the coil 13b of the ring joint portion 3b on the left side fits into the tip notched groove 9a, and the locking strip 10a on the right side is locked in the coil (locking portion) 13b of the ring joint portion 3b on the left side. When the temple 2b on the left side is folded, the arcuate portion of the coil 13a of the ring joint portion 3a on the right side fits into a tip notched groove 9b, and the locking strip 10b on the left side is locked in the coil (locking portion) 13a of the ring joint portion 3a on the right side. In this manner, since the locking strips 10a, 10b are reliably locked by the coils (locking portions) 13b, 13a of the ring joint portions 3b, 3a respectively, the both temples 2a, 2b folded in association with resilient deformation of the ring joint portion do not open.

The spectacle frame of the first embodiment of the present inventionis configured so that the ring joint portions 3a, 3b having torsion coil spring shapes are formed respectively by winding wires extending from the half rims 5a, 5b of the front portion 1, and the wires are extended further from the ring joint portions 3a, 3b respectively to form the temples 2a, 2b. The front portion 1 of the spectacle frame illustrated in Fig. 1 to Fig. 4B has a structure of holding the lenses 4a, 4b with the half rims 5a, 5b and the leveling lines 8a, 8b, and the both half rims 5a, 5b are brazed and coupled by the coupling member 6. However, a specific structure and mode of the front portion is not limited.

For example, the front portion 1 of the spectacle frame of the present invention may be configured so that the both half rims 5a, 5b are formed of a continuous one wire without using the coupling member 6. In this case, the front portion 1, the both ring joint portions 3a, 3b, and the both temples 2a, 2b are entirely formed of a continuous one wire, and the coupling member 6 as illustrated in Fig. 1 to Fig. 4B is not provided. The front portion 1 may be configured, unlike the mode in which the half rims 5a, 5b and the leveling lines 8a, 8b are used as illustrated in Fig. 1 to Fig. 4B, so that ring-shape full rims to fit the lenses 4a, 4b into are used and the both full rims are brazed and coupled by the coupling member. In this case as well, the wires extending to the ring joint portions and the temples are brazed to the full rims as a matter of course.

The front portion may be a rimless front portion, having no full rim or half rim. In the case of the rimless front portion, the both lenses 4a, 4b are directly screwed by the coupling member, and the armor lug portions extending from the ring joint portions 3a, 3b are directly screwed to the lenses on the outside of the lenses. As a matter of course, spectacle frame having a configuration in which resin-made pins or bushes superior in resiliency are fitted to couple the coupling members and the armor lug portions with the lenses instead of screwing are also applicable.

In the first embodiment, since the ring joint portions 3a, 3b are provided inside the temples 2a, 2b, the torsion coil springs as the ring joint portions 3a, 3b are resiliently deformed so that outer diameters of the coils (rings) thereof reduced when the temples 2a, 2b are folded, and so that the outer diameters of the coils (rings) are increased when they are opened outward. However, when the ring joint portions are formed outside the temples 2a, 2b, the ring joint portions 3a, 3b are resiliently deformed so that the outer diameters of the rings thereof are increased when the temples 2a, 2b are folded, and so that the outer diameters of the rings are reduced when they are opened outward.

Though, as described above, the spectacle frame of the first embodiment of the present invention is configured so that the ring joint portions 3a, 3b formed of the torsion coil springs are formed as the joint portions which function as the joints, the present invention is not limited to configured so that the joint portions are the ring joint portions 3a, 3b. Fig. 5A and Fig. 5B are a plan view and a left side view, respectively, illustrating only the joint portion on the left side and the periphery thereof of the spectacle frame of a second embodiment of the present invention, which is configured without using the screws as in the first embodiment. As illustrated in these drawings, in the spectacle frame of the second embodiment of the present invention, leaf spring joint portions 11a, 11b formed of leaf springs are attached to distal ends of the half rims 5a, 5b, and in addition, semi-arcuate locking portions 12a, 12b are attached to distal ends of the half rims 5a, 5b so as to be positioned inside the leaf spring joint portions 11a, 11b. Since super resilient members which are capable of resilient deformation (bending deformation) are used as the leaf spring joint portions 11a, 11b, the temples 2a, 2b can be folded without using hinges having a screw, by the resilient deformation (bending deformation) of the leaf spring joint portions 11a, 11b. Since Fig. 5A and Fig. 5B illustrate only part of the left side of the spectacle frame of the second embodiment, the leaf spring joint portion 11a, the half rim 5a, and the semi-arcuate locking portion 12a and the temple 2a, which are located on the right side of the spectacle frame, are not illustrated. However, since the spectacle frame is in lateral symmetry, the positions and the shapes thereof are to be understood from the respective corresponding parts on the left side. As a matter of course, in the free state in which the spectables are removed, the temples 2a, 2b intersect in X-shape in the same manner as the spectacle frame of the first embodiment illustrated in Fig. 3, and are pushed inward and folded from this intersecting state. The semi-arcuate locking portions 12a, 12b are disposed respectively so that the center of the semi-arc of the semi-arcuate locking portion 12a is located between the leaf spring joint portion 11a and the semi-arcuate locking portion 12a, and so that the center of the semi-arc of the semi-arcuate locking portion 12b is located between the leaf spring joint portion 11b and the semi-arcuate locking portion 12b.

In the same manner as the spectacle frame of the first embodiment illustrated in Fig. 2, the tips (ear hooks) fitted by insertion on the distal end portions of the temples include the notched grooves 9a, 9b and the locking strips 10a, 10b at distal end portions thereof, and the locking strips 10a, 10b can be locked reliably with the locking portions 12b, 12a attached to the inside of the leaf spring joint portions 11b, 11a. Here, each of the distal ends of the half rims 5a, 5b and the proximal ends of the temples 2a, 2b is provided with slit. Proximal ends of the leaf spring joint portions 11a, 11b are set in the slits of the distal ends of the half rims 5a, 5b, distal ends of the lead spring joint pritions 11a, 11b are set in the slits of the proximal ends of the temples 2a, 2b, and the distal ends of the half rims and the proximal ends of the temples are swaged, whereby the leaf spring joint portions 11a, 11b are fixed to the temples 2a, 2b and the half rims 5a, 5b, and the temples 2a, 2b are coupled to the half rims 5a, 5b via the leaf spring joint portions 11a, 11b. Not only the proximal end portions of the leaf spring joint portions 11a, 11b, but also the proximal portions of the locking portions 12a, 12b are set in the slits provided at the distal ends of the half rims 5a, 5b respectively, and they are fixed by swaging the distal ends of the half rims. As a matter of course, the fixation may be achieved by brazing, not by swaging.

Since the distal end portions of the locking portions 12b, 12a are curved into semi-arc shape, the locking strips 10a, 10b formed at the distal ends of the tips can be locked therewith. Here, the locking portions 12b, 12a is formed of a material having rigidity to a certain extent so that locking of the locking strips 10a, 10b of the tips therewith does not make deformation and disconnection caused thereby.

### Industrial Applicability

The present invention is effective as the spectacle frame, specifically as the spectacle frame having no screw used therein.

### Reference Signs List

- 1: front portion
- 2a, 2b: temple
- 3a, 3b: ring joint portion
- 4a, 4b: lens
- 5a, 5b: half rim
- 6: coupling member
- 7a, 7b: tip
- 8a, 8b: leveling line
- 9a, 9b: notched groove
- 10a, 10b: locking strip
- 11a, 11b: leaf spring joint portion
- 12a, 12b: locking portion
- 13a, 13b: coil of the ring joint portion

## Claims

1. A spectacle frame comprising:
a front portion configured to hold a lens;
a temple; and
a joint portion having no screw used therein, the joint portion intervening between both ends of the front portion and the temple, wherein
the joint portion is formed of a resiliently deformable resilient member for allowing the temple to be folded and opened,
a locking portion is provided inside the joint portion, and
an ear hooking portion is provided at a distal end portion of the temple, and
a locking strip is provided at a distal end portion of the ear hooking portion, the locking strip configured to be locked with the locking portion when the temple is folded.

2. The spectacle frame according to Claim 1, wherein
the joint portion is a ring joint portion having torsion coil spring shape, and formed of a wire extending so as to be continued integrally from the front portion,
the locking portion is a coil of the ring joint portion, and
the temple is formed of the wire extending further from the ring joint portion.

3. The spectacle frame according to Claim 1, wherein
the joint portion is a leaf spring joint portion formed of a leaf spring, and
the locking portion is a locking portion curved into a semi-arcuate shape, and mounted so as to be positioned inside the leaf spring joint portion.

4. The spectacle frame according to Claim 1, wherein
the ear hooking portions is a resin-made or rubber-made tip fitted by insertion on the temple, and
the locking strip is formed at a distal end portion of the tip.

5. The spectacle frame according to Claim 1, Claim 2, Claim 3, or Claim 4, wherein
the front portion includes:
a half rim, and
a high-tension line such as a leveling line for holding the lens.
